## Europäisches Patentamt
## European Patent Office
## Office européen des brevets

(11) Numéro de publication: **0 012 061**
**B1**

(12) **FASCICULE DE BREVET EUROPEEN**

(45) Date de publication du fascicule du brevet:
01.12.82

(51) Int. Cl.³: **G 21 C 17/04**, G 01 T 1/00

(21) Numéro de dépôt: 79400881.3

(22) Date de dépôt: 16.11.79

(54) Procédé de détection et de caractérisation des ruptures de gaines d'éléments combustibles de réacteur nucléaire.

(30) Priorité: 24.11.78 FR 7833266

(43) Date de publication de la demande:
11.06.80 Bulletin 80/12

(45) Mention de la délivrance du brevet:
01.12.82 Bulletin 82/48

(84) Etats contractants désignés:
BE DE GB IT NL SE

(56) Documents cités:
**DE-A-2 603 031**
**FR-A-2 251 886**
**FR-A-2 356 244**
**FR-A-2 383 454**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Beslu, Pierre, "Aramis I" Val de la Torse, F-13100 Aix en Provence (FR)**
Inventeur: **Leuthrot, Claude, Villa No 13 La Colline, F-84120 Beaumont de Pertuis (FR)**

(74) Mandataire: **Mongrédien, André et al, c/o Brevatome 25, rue de Ponthieu, F-75008 Paris (FR)**

Procédé de détection et de caractérisation des ruptures de gaines d'éléments combustibles de réacteur nucléaire.

La présente invention a trait à la détection et à la détermination des caractéristiques des ruptures de gaines qui peuvent intervenir dans les réacteurs nucléaires. Elle s'applique tout particulièrement aux réacteurs à eau légère ou lourde, mais peut également trouver des applications intéressantes dans le domaine des réacteurs refroidis par métal liquide.

Dans la suite du texte, et pour ne pas alourdir la description, il sera fait référence de façon quasi exclusive aux réacteurs modérés et refroidis à l'eau légère, mais il est bien entendu que ceci ne doit pas être considéré comme une limitation du domaine d'application de la présente invention.

Dans les réacteurs modérés à l'eau légère du type PWR ou BWR existants à ce jour, le matériau combustible est généralement de l'oxyde d'uranium $UO_2$ gainé à l'aide d'enveloppes de zircaloy, le combustible étant réparti en un certain nombre d'assemblages autonomes comportant chacun un grand nombre de crayons de combustible. A titre d'exemple, et pour rappeler des ordres de grandeur, un réacteur PWR d'une puissance de 900 MW électriques possède environ 40 000 crayons de combustible d'une longueur de 3,60 m répartis, dans des exemples courants, en 154 assemblages comprenant chacun 264 crayons.

Ces éléments combustibles, constituant le cœur du réacteur, baignent directement dans l'eau modératrice qui constitue aussi le réfrigérant primaire du réacteur. Dans le cas où une ou plusieurs gaines de crayons de combustible viennent à subir des ruptures ou fissures, les produits de fission radioactifs, qui normalement restent piégés à l'intérieur de la gaine se répandent alors à l'extérieur de celle-ci dans le réfrigérant primaire et, de là, peuvent contaminer la cuve du réacteur et un certain nombre de composants tels que les pompes et échangeurs primaires. Il y a donc un grand intérêt à surveiller, au cours du fonctionnement d'un tel réacteur nucléaire, l'apparition puis l'évolution éventuelle de fissures ou de ruptures dans les gaines constituant les crayons d'éléments combustibles.

Jusqu'à ce jour, aucun procédé vraiment satisfaisant n'a pu être mis en œuvre pour répondre à ce besoin et l'on se contente, par des méthodes plus ou moins empiriques, de surveiller l'activité globale de l'eau primaire de réfrigération en produits de fission (DE-A-2 603 032, FR-A-2 251 886).

La présente invention a pour objet un procédé de détection et de détermination des caractéristiques des ruptures de gaines d'éléments combustibles de réacteur nucléaire qui permet, après avoir effectué la détection de toute rupture de gaine survenant dans l'un des crayons des assemblages du cœur, d'en déterminer le nombre moyen, l'importance ainsi qu'éventuellement la localisation par des moyens simples à mettre en œuvre.

D'une façon générale, la surveillance des ruptures de gaines éventuelles ne peut intervenir qu'en utilisant comme source d'information les activités relatives soit aux produits de fission gazeux, soit aux produits de fission solides, solubles dans le fluide primaire du réacteur en fonctionnement. Parmi les nucléides que l'on peut ainsi utiliser, les plus fréquents et les plus intéressants sont parmi les produits gazeux, les gaz rares, kryptons et xénons et parmi les produits solides, les iodes et les césiums. Le tableau ci-après donne la liste de ces différents nucléides accompagnés de leur période, lesquelles sont, comme on peut le voir, très variables, de quelques minutes à plusieurs années.

| Nucléide | Période |
|---|---|
| 85m Kr | 4,48 heures |
| 87 Kr | 76,3 minutes |
| 88 Kr | 2,8 heures |
| 89 Kr | 3,18 minutes |
| 134 Cs | 2,06 ans |
| 137 Cs | 30,1 ans |
| 138 Cs | 32,2 minutes |
| 133 Xe | 5,29 jours |
| 133m Xe | 2,2 jours |
| 135 Xe | 9,17 heures |
| 137 Xe | 3,83 minutes |
| 138 Xe | 14,1 minutes |
| 131 I | 8,04 jours |
| 132 I | 2,38 heures |
| 133 I | 20,8 heures |
| 134 I | 52 minutes |
| 135 I | 6,59 heures |

Nota: dans ce tableau, m signifie métastable.

En première approximation, l'activité en produits de fission de leau primaire d'un réacteur nucléaire refroidi à l'eau pressurisée ne dépend que de trois paramètres qui sont:
- le nombre n de rupture de gaines;
- la température T du ou des crayons de combustible ayant subi une rupture;
- la taille de la ou des ruptures que l'on peut traduire par le coefficient de fuite vg.

Comme l'information recueuillie sur l'activité de l'eau du circuit primaire est une information globale et qu'il n'y a aucune possibilité de «sectoriser» la source de l'information, il en résulte que la température que l'on vient de définir ne peut être que la moyenne des températures des différents points des crayons de combustible ayant subi une fissure dès lors que le nombre n des ruptures est supérieur à 1; de la même façon, le concept de taille de la rupture ne peut que représenter la moyenne des surfaces de défauts existants. Ces constatations sont importantes pour la suite de l'exposé dans lequel il faudra toujours se référer à cette particularité à chaque fois qu'il sera question de la température des fissures, ou de la taille des ruptures. Pour ce dernier coefficient, on peut en donner dans le cas d'une rupture unique une définition plus précise qui est la suivante:

$$vg = D/e \times s/V$$

formule dans laquelle:

- D est le coefficient de diffusion du produit de fission déterminé en cm²/s;
- e est le chemin parcouru en centimètres par le produit de fission, c'est-à-dire à peu de choses près l'épaisseur de la gaine;
- s est la surface du défaut ou de la fissure en cm²;
- V est en pratique le volume de la chambre d'expansion comprise entre le combustible et sa gaine, exprimé en cm³.

On voit donc que le coefficient vg caractérise la proportion de l'activité totale présente dans la chambre d'expansion qui franchit la gaine fissurée par seconde. Il est donc bien caractéristique de la gravité d'une rupture et s'exprime par un nombre qui a les dimensions de l'inverse d'un temps. Les valeurs courantes du coefficient vg sont comprises entre $10^{-2}$/s à $10^{-6}$/s en moyenne pour un réacteur du type précédemment rappelé.

L'activité d'un nucléide produit de fission dans le circuit primaire d'un réacteur à eau pressurisée peut donc être représentée par une expression de la forme:

$$A_i = F(n, T, vg)$$

Pour une rupture ou des ruptures de gaines ayant des caractéristiques identiques, le rapport des activités de deux nucléides $A_i$ et $A_j$ est indépendant du nombre des ruptures et on a donc:

$$R = A_i/A_j = F'(T, vg)$$

La détermination de la température et de la taille de la ou des ruptures de gaines existant dans un cœur de réacteur pourrait donc être faite facilement en étudiant les rapports d'activité de nucléides si l'on connaissait à la fois les fonctions F' (T, vg), et la valeur de l'un des paramètres T ou vg. Dans le cas général, il n'en est pas ainsi, mais le demandeur a trouvé, et ceci est un résultat inattendu et intéressant, qu'en choisissant particulièrement les couples de nucléides dont on effectuait les rapports d'activité, on pouvait ainsi déterminer des couples dont les rapports d'activité par ailleurs facilement accessibles à la mesure, sont plus particulièrement dépendants de vg ou de la température. Comme les fonctions F'(T, vg) sont maintenant calculables par ordinateur à l'aide de programmes spéciaux connus, on est ramené à la résolution d'équations à une inconnue, permettant le calcul successif des paramètres T, vg et n.

Cette constatation nouvelle et très importante a permis de mettre au point un procédé de détermination des caractéristiques des ruptures de gaines d'éléments combustibles de réacteur nucléaire qui selon l'invention se caractérise par la succession des opérations suivantes:

- on détermine par le calcul pour les caractéristiques données du cœur du réacteur et pour le taux de combustion des ses éléments combustibles:

a) une série de premiers abaques donnant, pour un certain nombre de nucléides, leur activité totale dans le réfrigérant primaire en fonction de la température moyenne du combustible fissuré pour un état de ruptures de gaines défini arbitrairement par une seule rupture, chaque abaque de cette série étant établi pour une valeur particulière du coefficient vg;

b) un deuxième abaque donnant, pour différentes valeurs du coefficient vg et en fonction de la température moyenne du combustible fissuré, les rapports d'activité des différents nucléides pris deux à deux de façon à faire apparaître deux groupes de rapports, à savoir des rapports d'un premier groupe qui sont, en première approximation, indépendants de la température, et des rapports d'un second groupe qui varient de façon croissante en fonction de la température;

c) un troisième abaque, dérivé des rapports d'activité du premier groupe précédent, donnant pour ces mêmes rapports du premier groupe les variations du coefficient vg en fonction du rapport d'activité lui-même;

- on détermine, à partir de valeurs des rapports d'activités de nucléides du premier groupe mesurées dans le réfrigérant primaire du réacteur et reportées sur le troisième abaque précédent, une valeur moyenne du coefficient vg;

- on détermine, à partir de valeurs des rapports d'activités de nucléides du deuxième groupe mesurées dans le réfrigérant primaire du réacteur et reportées, en même temps que la valeur du coefficient vg précédemment trouvée, sur le deuxième abaque précédent, une valeur moyenne de la température du combustible fissuré;

- on détermine, à partir des activités mesurées pour un certain nombre de nucléides présents dans le réfrigérant primaire et reportées en même temps que la température précédente sur l'abaque de la première série correspondant au coefficient vg obtenu, le nombre réel de fissures.

Le demandeur a pu ainsi mettre en évidence que certains rapports d'activité de nucléides produits de fission contenus dans l'eau de réfrigération primaire d'un réacteur nucléaire, ne dépendaient pratiquement que d'un paramètre, à savoir la valeur de vg représentant la gravité moyenne des fissures. Comme il est maintenant classique de pouvoir déterminer par le calcul, à l'aide de programmes existants, les abaques représentant les fonctions R = F' (T, vg), on conçoit qu'il devient possible, lorsque cette fonction en dépend plus que d'une seule variable, de déterminer cette variable en rapprochant les valeurs lues sur les abaques établis théoriquement des valeurs effectivement déterminées par mesure spectrométrique sur le réfrigérant du réacteur. De tels programmes, permettant la simulation par ordinateur de l'apparition dans le fluide réfrigérant du réacteur d'une activité de produits de fission consécutive à des ruptures de gaines, sont connus notamment sous le nom de code PROFIP 3 et ont fait l'objet de la publication suivante: Thèse de troisième cycle, Université de Paris, Faculté des Sciences d'Orsay (Paris XI), Juin 1978 «Etude de la contamination du circuit primaire des réacteurs à eau pressurisée» par J.M. Gomit.

On voit donc que la mise en œuvre du procédé selon l'invention nécessite le calcul préalable de trois abaques différents à l'aide d'un programme de simulation des phénomènes de migration des produits de fission, provenant des ruptures de gaines, dans le réfrigérant du réacteur nucléaire, ainsi que la mesure expérimentale, par des méthodes de spectrométrie gamma en soi parfaitement connues, d'un certain nombre de rapports d'activités de nucléides présents dans le réfrigérant primaire à la suite de ruptures de gaines.

La mise en œuvre du procédé, objet de l'invention conduit ainsi à la détermination de proche en proche de la valeur moyenne du coefficient vg, de la valeur moyenne T, de la température des crayons à l'emplacement des fissures, et du nombre vraisemblable n de fissures réelles. A ce stade, il convient de rappeler que les différentes valeurs déterminées ne sont effectivement que des moyennes puisque les mesures sont faites sur le réfrigérant primaire en provenance de l'ensemble des crayons du cœur du réacteur, et il y a lieu d'en interpréter la signification comme suit.

La valeur moyenne du coefficient vg est caractéristique de la gravité moyenne des fissures de gaines de l'ensemble du cœur à l'instant considéré. Ce coefficient représente approximativement la surface totale des fissures existantes dans le cœur divisée par le nombre de celles-ci. La température moyenne des fissures doit se comprendre comme représentant la moyenne des températures réelles prises dans l'axe de chacun des différents crayons qui sont atteints par des fissures. Le nombre moyen des fissures n finalement obtenu découle de la moyenne d'un certain nombre de rapports d'activités par rapport à un abaque calculé dans l'hypothèse d'une fissure; le nombre n ainsi obtenu représente le nombre vraisemblable de fissures réelles compte tenu de l'hypothèse de l'identité de gravité des différentes fissures, cette hypothèse étant traduite par une valeur particulière du coefficient vg.

La détermination finale des trois caractéristiques vg, T et n peut intervenir à volonté soit à la main, soit dans le cadre d'une automatisation complète du procédé, à l'aide de machines calculatrices permettant ainsi la surveillance en continu du réacteur.

Conformément à l'invention, on a recours à une séparation en deux catégories différentes de couples de nucléides, pour effectuer les mesures. Le premier groupe de couples de nucléides donne des rapports d'activités pratiquement indépendants de la température des fissures et il s'obtient en pratique en associant deux par deux des nucléides dans une fraction dont le premier terme correspond à un nucléide dont la période est inférieure à dix heures et dont le second terme correspond à un nucléide dont la période est comprise entre trois minutes et la période du nucléide du premier terme. De préférence d'ailleurs, les meilleurs résultats sont obtenus lorsque les deux nucléides du premier groupe associé ont un écart de période maximal. Si l'on se réfère au tableau précédemment cité des principaux produits de fission et de leurs périodes, on constate qu'un grand nombre de couples de nucléides sont utilisables pour constituer des couples du premier groupe. Couramment toutefois, il est commode d'utiliser au dénominateur de la fraction de 135 xénon dont la période est de 9,17 heures, en association avec au dénominateur l'un des nucléides choisis parmi les 138 xénon (14,1 minutes), le 87 krypton (76,3 minutes) et le 138 césium (32,2 minutes). On pourrait utiliser également au numérateur de la fraction le 89 krypton (3,18 minutes), le 137 xénon (3,83 minutes), qui répondraient parfaitement à la définition. Bien entendu, pour un couple de nucléides choisi, on peut utiliser les inverses des rapports ci-dessus en inversant le numérateur et le dénominateur.

Pour déterminer les nucléides que l'on peut associer deux par deux afin de constituer des rapports d'activités du deuxième groupe, c'est-à-dire croissant avec la température, il s'est avéré nécessaire d'associer deux par deux des nucléides dans une fraction dont le premier terme correspond à un nucléide de période inférieure à dix heures et dont le second terme correspond à un nucléide de période supérieure à 24 heures. A titre d'exemple, on emploie fréquemment au dénominateur de la fraction du rapport d'activités, le 135 xénon (9,17 heures), et au numérateur le 133 xénon (5,29 jours) ou par exemple de 133m xénon (2,2 jours) ou le 131 iode (8,04 jours). Bien entendu, ces différentes combinaisons sont données à titre indicatif et nullement limitatif, les conditions optimales étant définies ainsi qu'il vient d'être expliqué. Comme précédemment signalé pour le premier groupe, on peut utiliser les inverses des rapports ci-dessus en inversant le numérateur et le dénominateur.

Une forme d'exécution particulièrement avantageuse de la présente invention a enfin pour objet un procédé de détermination des caractéristiques des ruptures de gaines d'éléments combustibles de réacteur nucléaire, caractérisé en ce que la détection de l'apparition d'une rupture de gaine est effectuée à l'aide des valeurs, pour un certain nombre de nucléides présents dans ledit fluide de refroidissement, du rapport R/B, dans lequel:

- R est le nombre d'atomes d'un tel nucléide effectivement relâché par seconde dans le fluide primaire par le cœur du réacteur en fonctionnement;

- B est le nombre calculé d'atomes du même nucléide produit théoriquement par seconde, et en ce que l'on place les différentes valeurs du rapport R/B ainsi déterminées sur un graphique en coordonnées cartésiennes en fonction de la constante de désintégration $\lambda$ de chaque nucléide représentée en abscisses et en ce que l'on surveille le bon alignement sur une même droite horizontale des différents points ainsi obtenus, la cessation de cet alignement étant caractéristique de l'apparition d'au moins une fissure.

La méthode est particulièrement simple, puisqu'il suffit de prendre en considération un petit nombre de nucléides, une dizaine par exemple, de façon à pouvoir obtenir un résultat graphiquement satisfaisant, et de déterminer l'activité réelle relâchée par seconde dans le fluide primaire de refroidissement. En faisant le rapport R/B de ce nombre d'atomes relâchés par seconde avec le nombre d'atomes produits également par seconde et calculé théoriquement pour le même nucléide, compte tenu bien entendu de la puissance de fonctionnement du réacteur, on obtient sur un graphique en fonction de λ un certain nombre de points dont la théorie montre qu'ils doivent se situer sur une même droite horizontale tant qu'il n'existe pas de ruptures de gaines. Il suffit donc de tracer périodiquement ce graphique et de vérifier, aux erreurs de mesure près, l'alignement des différents points, la cessation de cet alignement étant caractéristique de l'apparition d'un défaut. Dans le cas où cette première partie du diagnostic se révèle positive et où un tel défaut est effectivement détecté, le procédé, objet de l'invention, permet alors de faire la surveillance de cette rupture ainsi mise en évidence.

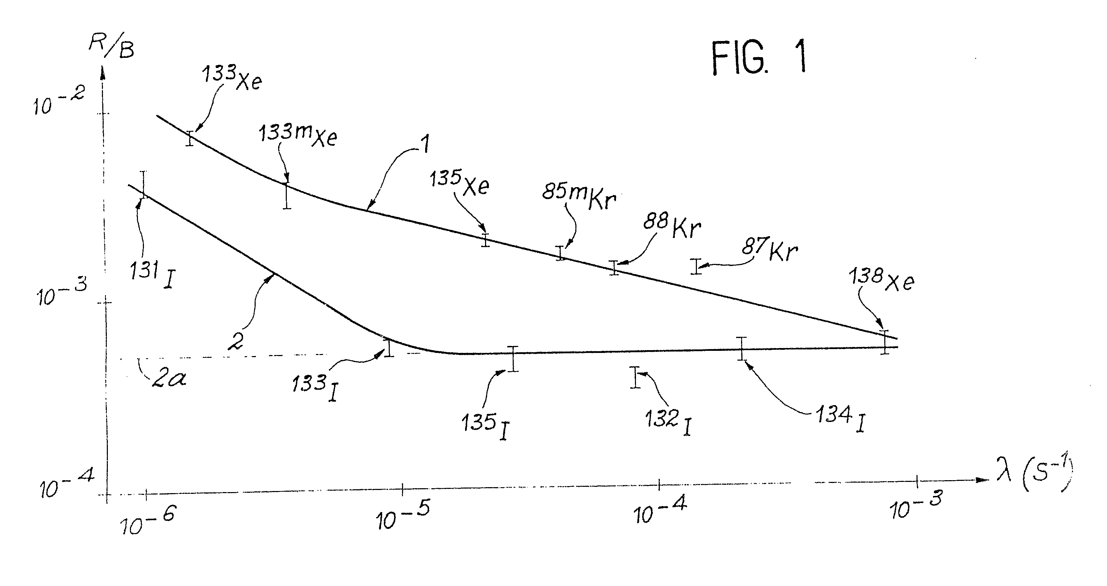

De toute façon, l'invention sera mieux comprise en se référant à la description qui suit d'un certain nombre d'exemples de détection et de détermination des caractéristiques des ruptures de gaines d'éléments combustibles de réacteur nucléaire du type PWR, description qui sera donnée à titre illustratif mais non limitatif et sera faite en se référant aux figures 1 à 4 ci-jointes sur lesquelles:

- la fig. 1, illustrative du procédé de détection des ruptures de gaines, représente pour un certain nombre de nucléides le rapport d'activité R/B en fonction de la constante de désintégration λ de chacun d'eux exprimée en seconde $^{-1}$;

- la fig. 2 représente un exemple de calcul du premier abaque, donnant, pour un coefficient vg donné, en fonction de la température, l'activité totale en Curies par tonne d'eau de réfrigération primaire d'un réacteur pour différents produits de fission radioactifs provenant d'une seule rupture de gaine;

- la fig. 3 représente un exemple de deuxième abaque sur lequel ont a porté en fonction de la température exprimée en °C le rapport d'activités de nucléides des premier et deuxième groupes pour différentes valeurs du coefficient v;

- la fig. 4 représente un exemple de troisième abaque tracé pour les trois rapports particuliers d'activités du premier groupe de la fig. 3, et donnant les valeurs de vg en fonction du rapport d'activités.

La fig. 1 est relative au réacteur de Fessenheim I qui au moment où la courbe a été dressée fonctionnait avec une puissance de 2650 MW thermiques. Le rapport R/B défini comme précédemment par le rapport du nombre d'atomes de chaque nucléide de fission relâché par seconde dans le liquide sur le nombre d'atomes calculés du même nucléide produit théoriquement par seconde, est porté en ordonnées, en échelle logarithmique, en fonction du coefficient de désintégration radioactif λ exprimé en seconde$^{-1}$ et porté en abscisses en échelle logarithmique. Douze nucléides de fission radioactifs ont été examinés et ont servi à déterminer les douze points correspondants sur la courbe; dans l'ordre d'abscisses croissantes, on rencontre l'iode 131, le xénon 133, le 133m xénon, l'iode 133, le xénon 135, l'iode 135, le 85m krypton, le 88 krypton, l'iode 132, le 87 krypton, l'iode 134 et le xénon 138. Comme on le voit sur la figure, les différents points, aux erreurs de mesure près naturellement, sont répartis sur deux courbes 1 et 2 qui sont distinctes et qui diffèrent par conséquent d'une seule droite horizontale. Cette simple constatation permet d'acquérir la certitude qu'il existe déjà à ce moment au moins une fissure dans les crayons constituant le cœur du réacteur. A titre d'explication complémentaire, on a tracé en pointillés sous la référence 2a la portion de droite horizontale correspondant au niveau de contamination avant la rupture de gaine.

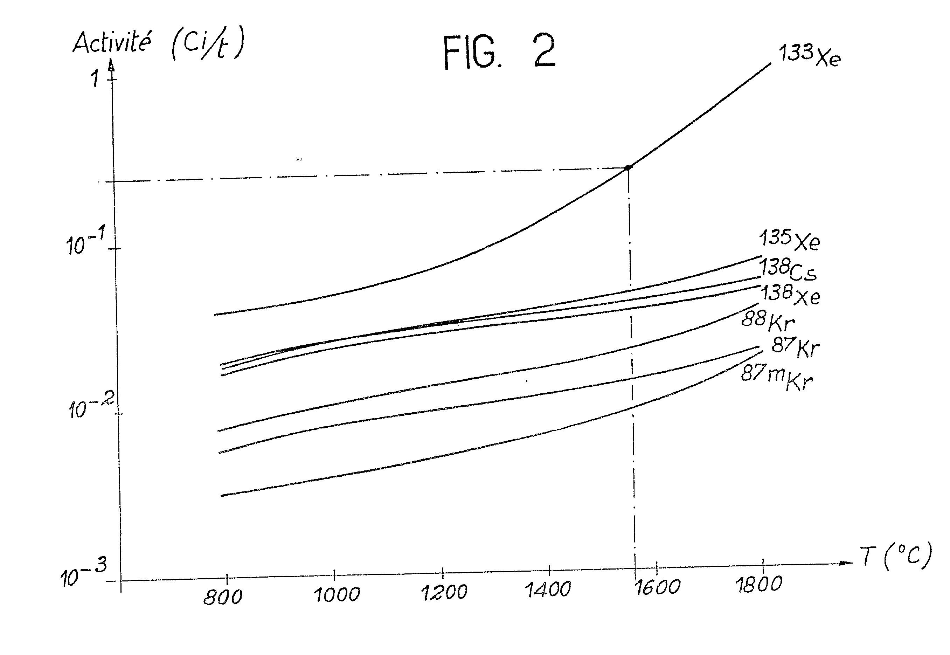

En se référant maintenant aux fig. 2 à 4, on va décrire de façon complète une étude de ruptures de gaine telle qu'elle a été effectuée de façon pratique sur le réacteur nucléaire à eau pressurisée de la centrale de Tihange durant l'année 1978.

La fig. 2 représente un premier abaque (au sens donné précédemment à ce terme dans le présent texte) calculé sur ordinateur à l'aide du programme PROFIP 3 dans les hypothèses suivantes: le coefficient de fuite vg des gaines fissurées a été fixé à $10^{-2}$/s et pour une seule rupture de gaine. Par ailleurs, le calcul a été fait en prenant comme taux de combustion des éléments combustibles la valeur de 12 000 MWJ/T. On a ainsi calculé l'activité en Curie/tonne d'eau dans l'eau primaire du réacteur pour sept nucléides produits de fission, à savoir les trois xénons 133, 135 et 138, les trois kryptons 85m, 87 et 88 et le césium 138 en fonction de la température du crayon défectueux exprimée en °C. Les ordonnées sont en échelle logarithmique et les abscisses en échelle linéaire.

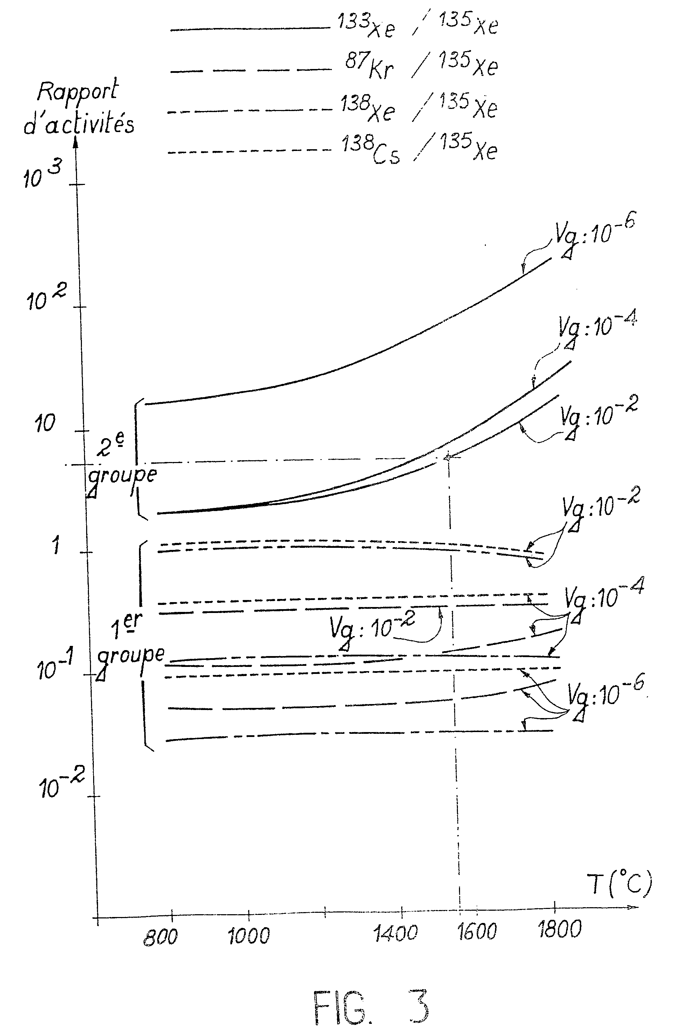

Sur la fig. 3, on a représenté un deuxième abaque calculé également pour un taux de combustion de 12 000 MWJ/T; il montre l'évolution de rapports d'activités de nucléides produits de fission portés en ordonnées, en échelle logarithmique, en fonction de la température moyenne des crayons fissurés portée en abscisses en échelle linéaire. Ces rapports ont été dressés pour un certain nombre de valeur du coefficient vg variant de $10^{-2}$/s à $10^{-6}$/s. Le mérite de cette fig. 3 est de faire apparaître clairement les deux groupes de couples de nucléides, à savoir à la partie inférieure de la fig. 3, les rapports du premier groupe qui sont pratiquement indépendants de la température et à la partie supérieure de la figure, les rapports d'activités du deuxième groupe (en traits pleins) dont on voit qu'ils croissent de façon importante et rapidement en fonction de cette même température. Dans cet exemple de la fig. 3, les rapports de nucléides du premier groupe choisis sont au nombre de trois. Ce sont: 87 krypton/ 135 xénon, 138 xénon/135 xénon, et 138 césium/ 135 xénon. Un seul couple du deuxième groupe a été étudié; il s'agit du rapport 133 xénon/135 xénon.

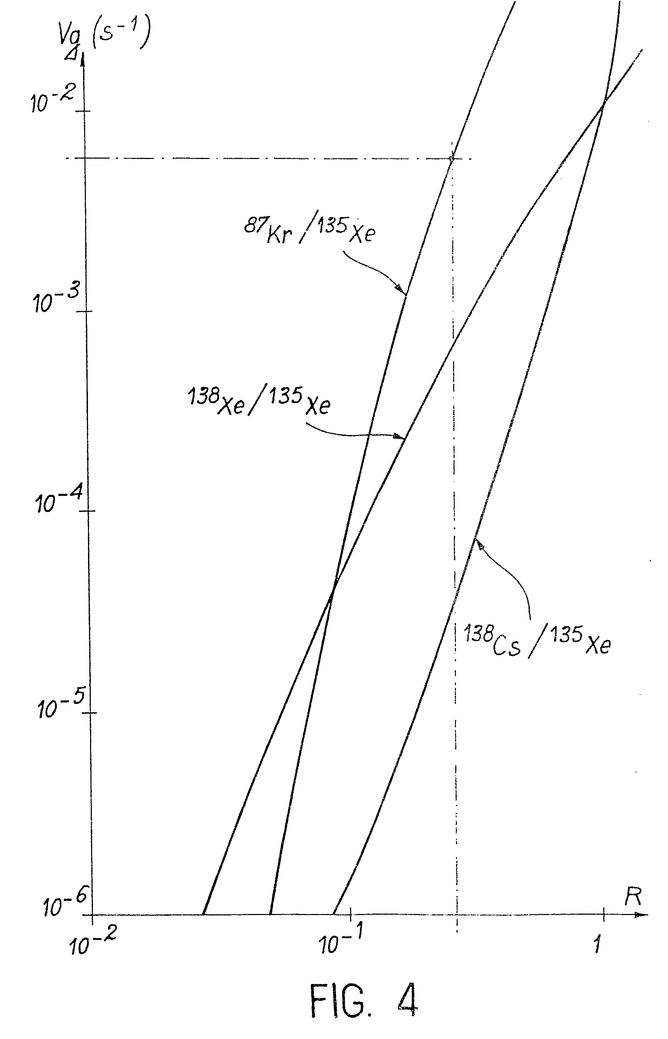

Sur la fig. 4, on a reporté les résultats des couples de nucléides du premier groupe de la fig. 3, sous une autre présentation qui correspond à un abaque du troisième type décrit précédemment. En ordonnées on a porté en échelle logarithmique la valeur du coefficient vg en seconde$^{-1}$ et, en abscisses, en échelle logarithmique, le rapport des activités de chaque couple de nucléides. Sur cette fig. 4, on doit noter l'absence de la température qui par définition est sans action sur les rapports d'activités des nucléides du premier groupe.

Dans la pratique, pour réaliser la surveillance des ruptures de gaines, on commence par utiliser le troisième abaque, en mesurant des rapports d'activités de nucléides appartenant au premier groupe. On en déduit alors facilement la valeur moyenne vg caractéristique de l'état des ruptures de gaines du cœur à l'instant considéré, c'est-à-dire pratiquement le rapport de la surface totale des fissures au nombre des fissures.

Dans le cas particulier du calcul fait sur le réacteur de Tihange, il a été trouvé comme valeur moyenne à la suite de l'exploitation de ce troisième abaque un vg de l'ordre de 10$^{-2}$/s.

En reportant ensuite cette valeur moyenne vg sur les rapports d'activités des nucléides du deuxième groupe sur le deuxième abaque (fig. 3) et en la rapprochant du rapport d'activités effectivement mesuré par spectrométrie dans l'eau primaire du cœur pour le rapport de nucléides 133 xénon/135 xénon, on peut déterminer alors la température moyenne des gaines fissurées. Dans le cas de l'étude faite pour le réacteur de Tihange on a trouvé que cette température moyenne était de 1560 °C.

En reportant enfin cette dernière valeur de la température sur le premier abaque de la fig. 2, correspondant à un coefficient vg de 10$^{-2}$/s et à une rupture de gaine, avec le même taux de combustion de 12 000 MWJ/T, on peut déterminer par comparaison avec la valeur mesurée de l'activité totale dans l'eau primaire pour chacun des sept produits de fission figurant sur ce premier abaque, le nombre réel de ruptures de gaines. Cette détermination faite en tenant compte des différentes erreurs possibles a conduit à un nombre moyen de fissures n = 2,7 ± 0,5.

Les résultats exacts mesurés pour l'activité de chaque nucléide sont consignés dans le tableau ci-après correspondant à des mesures effectuées durant le mois de janvier 1978 à la centrale de Tihange.

| vg = 10$^{-2}$ ... T = 1560 °C | | | |
|---|---|---|---|
| Nucléides | Activité mesurée (Ci/t) | Calcul PROFIP pour une rupture de gaine | Nombre de ruptures calculé |
| 133   Xe | (7,52 ± 2,04) 10$^{-1}$ | 2,50 10$^{-1}$ | 3,0 ± 0,8 |
| 133m Xe | (1,87 ± 0,38) 10$^{-1}$ | 6,78 10$^{-3}$ | 2,8 ± 0,6 |
| 135   Xe | (1,61 ± 0,19) 10$^{-1}$ | 5,77 10$^{-2}$ | 2,8 ± 0,3 |
| 85m Kr | (3,08 ± 0,43) 10$^{-2}$ | 1,18 10$^{-2}$ | 2,6 ± 0,4 |
| 87   Kr | (4,12 ± 0,40) 10$^{-2}$ | 1,87 10$^{-2}$ | 2,2 ± 0,2 |
| 88   Kr | (6,04 ± 0,76) 10$^{-2}$ | 1,85 10$^{-2}$ | 3,3 ± 0,4 |

A la fin du cycle de tests effectués, le réacteur a été arrêté, le cœur déchargé et examiné, et on a trouvé effectivement que trois crayons de combustibles étaient endommagés, l'un de ceux-ci en fait ayant même perdu son bouchon. Les trois crayons travaillaient à des températures de l'ordre effectivement de 1560 °C, c'est-à-dire à des températures supérieures à la température moyenne du cœur prise dans l'axe des crayons, laquelle était d'environ 1300 °C.

**Revendications**

1. Procédé de détermination des caractéristiques des ruptures de gaines d'éléments combustibles de réacteurs nucléaires, caractérisé en ce que, après avoir détecté l'apparition d'une telle rupture, on effectue successivement les opérations suivantes:

- on détermine par le calcul pour les caractéristiques données du cœur du réacteur et pour le taux de combustion de ses éléments combustibles:

a) une série de premiers abaques donnant, pour un certain nombre de nucléides, leur activité totale dans le réfrigérant primaire en fonction de la température moyenne du combustible fissuré pour un état de rupture de gaines défini arbitrairement par une seule rupture, chaque abaque de cette série étant établi pour une valeur particulière du coefficient vg qui caractérise la proportion de l'activité totale qui par seconde franchit la gaine fissurée;

b) un deuxième abaque donnant, pour différentes valeurs du coefficient vg et en fonction de la température moyenne du combustible fissuré, les rapports d'activités des différents nucléides pris deux à deux de façon à faire apparaître deux groupes de rapports, à savoir des rapports d'un premier groupe qui sont, en première approximation, indépendants de la température, et des rapports d'un second groupe qui varient de façon croissante en fonction de la température;

c) un troisième abaque, dérivé des rapports d'activités du premier groupe précédent, donnant pour ces mêmes rapports du premier groupe les variations du coefficient vg en fonction du rapport d'activités lui-même;

- on détermine, à partir de valeurs des rapports d'activités de nucléides du premier groupe mesurées dans le réfrigérant primaire du réacteur et reportées sur le troisième abaque précédent, une valeur moyenne du coefficient vg;

- on détermine, à partir de valeurs des rapports d'activités de nucléides du deuxième groupe mesurées dans le réfrigérant primaire du réacteur et reportées, en même temps que la valeur du coefficient vg précédemment trouvée, sur le deuxième abaque précédent, une valeur moyenne de la température du combustible fissuré;

- on détermine, à partir des activités mesurées pour un certain nombre de nucléides présents dans le réfrigérant primaire et reportées en même temps que la température précédente sur l'abaque de la première série, correspondant au coefficient vg obtenu, le nombre réel de fissures.

2. Procédé de détermination des caractéristiques des ruptures de gaines d'éléments combustibles selon la revendication 1, caractérisé en ce que l'on obtient les couples de nucléides donnant des rapports d'activités du premier groupe en associant deux par deux des nucléides dans une fraction dont le premier terme correspond à un nucléide dont la période est inférieure à 10 heures et dont le second terme correspond à un nucléide dont la période est comprise entre 3 minutes et la période du nucléide du premier terme, et en ce que l'on obtient les rapports d'activités de nucléides du deuxième groupe en associant deux par deux des nucléides dans une fraction dont le premier terme correspond à un nucléide dont la période est inférieure à 10 heures et dont le second terme correspond à un nucléide dont la période est supérieure à 24 heures.

3. Procédé de détermination des caractéristiques des ruptures de gaines d'éléments combustibles selon la revendication 2, caractérisé en ce que l'on constitue les couples de nucléides du premier groupe en choisissant deux nucléides dont l'écart entre les périodes soit maximal.

4. Procédé de détermination des caractéristiques des ruptures de gaines d'éléments combustibles de réacteurs nucléaires selon l'une des revendications 1 à 3 précédentes, caractérisé en ce que les nucléides utilisés sont choisis parmi les kryptons, les xénons, les césiums et les iodes.

5. Procédé de détermination des caractéristiques des ruptures de gaines d'éléments combustibles de réacteurs nucléaires selon l'une des revendications 1 à 4 précédentes, caractérisé en ce que ladite détection de l'apparition d'une telle rupture ou fissure est effectuée, à laide des valeurs, pour un certain nombre de nucléides présents dans ledit fluide de refroidissement, du rapport R/B, dans lequel:

- R est un nombre d'atomes d'un tel nucléide effectivement relâché par seconde dans le fluide par le cœur du réacteur en fonctionnement,

- B est le nombre calculé d'atomes du même nucléide produit théoriquement par seconde, et en ce que, pour détecter l'apparition d'une fissure, on place les différentes valeurs du rapport R/B ainsi déterminées sur un graphique en coordonnées cartésiennes en fonction de la période $\lambda$ de chaque nucléide représentée en abscisses et en ce que l'on surveille le bon alignement sur une même droite horizontale des différents points ainsi obtenus, la cessation de cet alignement étant caractéristique de l'apparition d'au moins une fissure.

## Claims

1. Process for determining the rupture characteristics of the jackets of fuel elements of nuclear reactors characterized in that, after having detected such a rupture, the following operations are conducted:

- determination by calculation from the given characteristics of the reactor core and the rate of reaction of the fuel elements:

(a) one series of first graphs giving, for a certain number of nucleides, their total activity in the primary coolant as a function of the median temperature of a ruptured element for a rupture-state of the jackets arbitrarily defined by a single rupture, each graph of the series being established for a particular value of the coefficient vg which characterises the proportion per second of the total activity leaving the ruptured jacket;

(b) a second graph giving, for different values of the coefficient vg and as a function of the median temperature of a ruptured element, the ratios of activity of pairs of different nucleides whereby to produce two groups of ratios, a first group of ratios which are substantially independent of temperature, and a second group of ratios which increase with temperature;

(c) a third graph, derived from the activity ratios of the above-mentioned first group, giving for the same ratios of the first group, the variation of the coefficient vg as a function of the ratio of the activities themselves;

- determination of a median value of the coefficient vg from the values of the activity ratios of the nucleides of the first group measured in the primary coolant of the reactor and set out in the above-mentioned third graph;

- determination of a median value of the temperature of the ruptured element, from the values of the activity ratios of the nucleides of the second group measured in the primary coolant of the reactor and set out in the above-mentioned second graph at the same time as the previously-determined value of coefficient vg;

- determination of the real number of ruptures corresponding to the determined value of the coefficient vg, from the measured activity of a certain number of nucleides present in the primary coolant of the reactor and set out at the same time as the above-mentioned temperature on the first graph.

2. Process for determining the rupture characteristics of the jackets of fuel elements according to Claim 1 characterized in that the pairs of nucleides giving activity ratios in the first group are obtained by pairing nucleides in a fraction whose first term corresponds to a nucleide whose period is less than 10 hours and whose second term corresponds to a nucleide whose period is between 3 minutes and the period of the nucleide of the first term, and in that the activity ratios of nucleides of the second group are obtained by pairing nucleides in a fraction, whose first term corresponds to a nucleide whose period is less than 10 hours, and whose second term corresponds to a nucleide whose period is greater than 24 hours.

3. Process for determining the rupture characteristics of the jackets of fuel elements according to Claim 2 characterized in that the pairs of nucleides of the first group are selected by choosing two nucleides whose periods exhibit the maximal difference.

4. Process for determining the rupture characteristics of the jackets of fuel elements of nuclear reactors according to any one of Claims 1 to 3 characterized in that the nucleides employed are selected from kryptons, xenons, cesiums and iodines.

5. Process for determining the rupture characteristics of the jackets of fuel elements of nuclear reactors according to any one of Claims 1 to 4 characterized in that the appearance of a rupture is determinde from the value of a ratio R/B, for a certain number of nucleides present in the said coolant fluid, in which ratio:

- R ist the number of atoms fo such a nucleide actually released per second into the fluid from the core of an operating reactor, and

- B ist the calculated number of atoms of the same nucleide theoretically produced per second, and in that the different values of the ratio R/B thus determined are plotted on a graph with Cartesian coordinates as a function of the period $\lambda$ of each nucleide represented on the abscissa, and in that good alignment of the thus-plotted points on the same horizontal level is surveyed, an interruption in this alignment being characteristic of the appearance of at least one fissure.

## Patentansprüche

1. Verfahren zum Bestimmen der Eigenschaften von Brüchen der Mäntel von Brennelementen in Kernreaktoren, dadurch gekennzeichnet, dass nachdem das Auftreten eines solchen Bruches festgestellt worden ist, nacheinander die folgenden Schritte durchgeführt werden:

- man bestimmt durch Berechnung für die gegebenen Kenndaten des Reaktorkernes und für das Verbrennungsverhältnis seiner Brennelemente:

a) eine Reihe von ersten Nomogrammen, die für eine gewisse Anzahl von Nukliden ihre Gesamtaktivität in dem Primärkühlmittel als Funktion der mittleren Temperatur des gebrochenen Brennstoffes für einen Zustand des Bruches der Mäntel angeben, welcher beliebig durch nur einen Bruch festgelegt ist, wobei jede Kurve dieser Reihe für einen besonderen Wert des Koeffizienten vg aufgestellt wird, welcher den Anteil der Gesamtaktivität kennzeichnet, der pro Sekunde durch den gebrochenen Mantel hindurchgelangt,

b) ein zweites Nomogramm, welches für unterschiedliche Werte des Koeffizienten vg und als Funktion der mittleren Temperatur des gebrochenen Brennstoffes die Verhältnisse der Aktivitäten der verschiedenen Niklide angibt, die paarweise derart genommen werden, dass sich zwei Gruppen von Verhältnissen ergeben, d.h. Verhältnisse einer ersten Gruppe, welche in erster Annäherung unabhängig von der Temperatur sind, und Verhältnisse einer zweiten Gruppe, welche sich in zunehmender Weise als Funktion der Temperatur ändern,

c) ein drittes Nomogramm, welches von den Verhältnissen der Aktivitäten der vorhergehenden, ersten Gruppe abgeleitet ist und für diese selben Verhältnisse der ersten Gruppe die Änderungen des Koeffizienten vg als Funktion des Verhältnisses der Aktivitäten selbst gibt,

- man bestimmt ausgehend von den in dem Primärkühlmittel des Reaktors gemessenen und in dem dritten vorhergehenden Nomogramm eingetragenen Werten der Verhältnisse der Aktivitäten der Nuklide der ersten Gruppe einen mittleren Wert des Koeffizienten vg,

- man bestimmt ausgehend von den in dem Primärkühlmittel des Reaktors gemessenen und in dem zweiten vorgenannten Nomogramm gleichzeitig mit dem vorhergehend getundenen Wert des Koeffizienten vg eingetragenen Werten der Verhältnisse der Aktivitäten der Nuklide der zweiten Gruppe einen mittleren Wert der Temperatur des gebrochenen Brennstoffes,

- man bestimmt ausgehend von den für eine gewisse Anzahl von Nukliden, welche in dem Primärkühlmittel vorhanden sind, gemessenen und gleichzeitig wie die vorgenannte Temperatur in dem Nomogramm der ersten Reihe eingetragenen Aktivitäten, welche dem erhaltenen Koeffizienten vg entspricht, die wirkliche Anzahl von Brüchen.

2. Verfahren zum Bestimmen der Eigenschaften von Brüchen der Mäntel von Brennelementen nach Anspruch 1, dadurch gekennzeichnet, dass man die Paare von Nukliden erhält, welche die Verhältnisse von Aktivitäten der ersten Gruppe ergeben, indem man paarweise Nuklide in einem Bruch verbindet, dessen erster Therm einem Nuklid, dessen Periode kleiner als 10 Stunden ist und dessen zweiter Therm einem Nuklid entspricht, dessen Periode zwischen 3 Minuten und der Periode des Nuklids des ersten Therms liegt, und dass man die Verhältnisse der Aktivitäten der Nuklide der zweiten Gruppe erhält, indem man paarweise Nuklide in einem Bruch verbindet, dessen erster Therm einem Nuklid entspricht, dessen Periode kleiner als 10 Stunden ist und dessen zweiter Therm einem Nuklid entspricht, dessen Periode über 24 Stunden liegt.

3. Verfahren zum Bestimmen der Eigenschaften von Brüchen der Mäntel von Brennelementen nach Anspruch 2, dadurch gekennzeichnet, dass man die Paare von Nukliden der ersten Gruppe bildet, indem man zwei Nuklide auswählt, deren Abstand zwischen den Perioden maximal ist.

4. Verfahren zum Bestimmen der Eigenschaften von Brüchen der Mäntel von Brennelementen von Kernreaktoren nach einem der vorhergehenden Ansprüche 1 bis 3, dadurch gekennzeichnet, dass die verwandten Nuklide aus den Nukliden des Kryptons, des Xenons, des Cäsiums und des Jods ausgewählt werden.

5. Verfahren zum Bestimmen der Eigenschaften von Brüchen der Mäntel von Brennelementen in Kernreaktoren nach einem der vorhergehenden Ansprüche 1 bis 4, dadurch gekennzeichnet, dass das Feststellen des Auftretens eines solchen Bruches oder Risses mit Hilfe der Werte des Verhältnisses R/B für eine bestimmte Anzahl von Nukliden, die in dem Kühlfluid vorhanden sind, vorgenommen wird, wobei

- R eine Anzahl von Atomen eines solchen Nuklides bedeutet, die tatsächlich pro Sekunde in das Fluid durch den sich in Betrieb befindenden Reaktorkern abgegeben wird,
- B die berechnete Anzahl von Atomen desselben Nuklids bedeutet, die theoretisch pro Sekunde erzeugt wird und dass man, um das Auftreten eines Risses festzustellen, die verschiedenen derart bestimmten Werte des Verhältnisses R/B in einer grafischen Darstellung in kartesischen Koordinaten als Funktion der Periode $\lambda$ eines jeden Nukleids, welches als Abszisse dargestellt ist, aufträgt und dass man die gute Ausrichtung der so erhaltenen, verschiedenen Punkte auf derselben, horizontalen Geraden überprüft, wobei die Beendigung dieser Ausrichtung für das Auftreten von wenigstens einem Bruch charakteristisch ist.

FIG. 1

2.14

FIG. 2

3 / 4

FIG. 3

FIG. 4